# EUROPEAN PATENT APPLICATION

(11) **EP 4 749 245 A1**
(43) Date of publication of application: **27.05.2026**
(21) Application number: 24215022.5
(22) Date of filing: 25.11.2024
(51) Int. Cl.: G01C 21/36, B60W 50/16, B62D 15/02

(54) **DRIVING ASSIST SYSTEM AND METHOD FOR ASSISTING DRIVING OF A VEHICLE AND VEHICLE COMPRISING SAME**

(71) Applicant: KB Intellectual Property GmbH & Co. KG, 82049 Pullach (DE)
(72) Inventor: CHINCHOLI, Amit N, 413002 Solapur (IN); VARPE, Ramkrishna, 411033 Pune (IN)

(57) **Abstract**

The present disclosure relates to a driving assist system (10) and method for assisting driving of a vehicle (1) having a steering wheel (3) or handlebar, comprising a control device (12) configured to receive from a navigation system (2) at least one signal which is indicative of an imminent maneuver of the vehicle travelling on a calculated route (21) to a destination, the maneuver involving at least one change in a moving direction of the vehicle. The control device (12) is configured to process the at least one signal from the navigation system (2) and, in a case in which the at least one signal is indicating an imminent maneuver of the vehicle, to generate and provide an actuation signal (AS) to at least one haptic actuator (15, 16, 30) of the vehicle for generating at least one haptically perceptible stimulus (LV, RV) acting on the steering wheel (3) or handlebar before the vehicle reaches a position of the maneuver. The disclosure also relates to a vehicle comprising such driving assist system.

## Description

The present disclosure relates to a driving assist system for assisting driving of a vehicle, and to a vehicle comprising such driving assist system. The present disclosure further relates to a method for assisting driving of a vehicle.

Driving assist systems for vehicles, such as automobiles or trucks, are known in the art in various forms. For example, such driving assist systems comprise, or are coupled with, a navigation system which calculates a route to a destination. Known vehicle navigation systems typically employ a variety of methods for communicating a route to a driver, for example, voice notifications and visual display of the route and/or maneuver instructions to inform the driver of an upcoming or imminent maneuver which involves a change in a moving direction of the vehicle, e.g. at a road crossings and/or road turns. By using maneuver instructions via audio in addition to display, the system allows the driver to keep his eyes on the road.

Nevertheless, in heavy traffic conditions, for example, it may be difficult to view a display screen regarding the route and any maneuver instructions, or the driver may miss the audio instruction. There may also be disturbance if the driver is listening to other audio content such as music while driving.

It would therefore be beneficial to provide a driving assist system and method for assisting driving of a vehicle, which are capable to inform a driver of a vehicle about an upcoming or imminent maneuver on a route to a destination in a way that the risk for the driver of missing an imminent maneuver is reduced.

The present disclosure relates to a driving assist system and method for assisting driving of a vehicle, and to a vehicle comprising such driving assist system according to the appended claims. Embodiments are disclosed in the dependent claims.

According to an aspect, there is provided a driving assist system for assisting driving of a vehicle having a steering wheel or handlebar, comprising a control device configured to receive from a navigation system at least one signal which is indicative of an imminent maneuver of the vehicle travelling on a calculated route to a destination, the maneuver involving at least one change in a moving direction of the vehicle. The control device is configured to process the at least one signal from the navigation system and, in a case in which the at least one signal is indicating an imminent maneuver of the vehicle, to generate and provide an actuation signal to at least one haptic actuator of the vehicle for generating at least one haptically perceptible stimulus acting on the steering wheel or handlebar of the vehicle before the vehicle reaches a position of the maneuver.

The driving assist system and method provide advantages such as that the driver can maintain full focus on the road on which the vehicle is travelling and concentrate on control of the steering wheel or handlebar for most of the times. Any distraction when looking at a display screen for an imminent maneuver can be reduced and, hence, the driver can completely focus on driving. This system allows the driver to listen to music without any interruptions with reduced or without risk for the driver of missing an imminent maneuver. In addition, if the driver misses the audio-visual indication of an imminent maneuver, but recognizes the at least one haptically perceptible stimulus, such as a vibration, on the steering wheel or handlebar, the driver can nevertheless avoid sharp maneuvers or turns in case of late realization of the upcoming maneuver. It should be noted that the at least one haptically perceptible stimulus is provided before the vehicle reaches the position of the maneuver, i.e. is not a stimulus in the sense of a power steering assist force for helping turning the steering wheel or handlebar, but is only a stimulus which is haptically perceptible by the driver for information purposes (kind of "haptic feedback") and has no effect on positioning of the steering wheel or handlebar by the driver. In other words, such stimulus has no power steering function for reducing a driver's effort to turn the steering wheel or handlebar of the vehicle.

The vehicle may be, in principle, any kind of vehicle, such as any type of land vehicle, having a steering wheel, such as an automobile or truck, or a handlebar, such as a motorcycle, bicycle or roller mobile (small automobile having a handlebar instead of a steering wheel).

The control device may be implemented in software and/or hardware in any appropriate processing device, such as in one or more microprocessors of a local device, e.g., of a dedicated control unit, such as an Electronic Control Unit (ECU) of the vehicle which may implement, at least in part, a navigation function, and/or in a navigation system, such as an in-vehicle navigation system which is implemented in the vehicle. Such navigation system may also be implemented in software and/or hardware in an ECU of the vehicle.

Analogously, the driving assist system may be implemented in software and/or hardware, in discrete or distributed manner, in any appropriate processing device, such as in one or more microprocessors of an ECU and/or navigation system. According to an embodiment, the driving assist system comprises a navigation system, or a part thereof, and/or the at least one haptic actuator, for example a vibrating or rotation actuator, configured to generate the haptically perceptible stimulus acting on the steering wheel or handlebar.

The driving assist system may be implemented individually, or in any type of driving assist system including an automatic, semiautonomous and/or autonomous driving control system of the vehicle (such as so-called Advanced Driver Assistance Systems, ADAS, level 2), such that it informs the driver of an imminent maneuver by at least one haptic stimulus, regardless of whether the driver is required to actively move the steering wheel or handlebar for following the change of direction involved with the maneuver, or without requiring the driver to actively perform the maneuver since this is done by the autonomous driving control system. Since in such autonomous driving control systems (e.g., level 2 ADAS), the driver is typically required to keep his or her hands on the steering wheel or handlebar, the same or similar advantages can be achieved as with any conventional driving assist systems implementing aspects of the invention.

According to an embodiment, the control device is configured to generate and provide the actuation signal to the at least one haptic actuator for generating the at least one haptically perceptible stimulus in a manner and/or at a location of the steering wheel or handlebar which is indicative of the moving direction of the vehicle after the maneuver. Accordingly, the driver can intuitively recognize from the type and/or location of the stimulus in which direction to turn the steering wheel or handlebar for following the maneuver.

According to an embodiment, the control device is configured to generate and provide the actuation signal to a power steering motor acting on the steering wheel or handlebar for generating the at least one haptically perceptible stimulus through the power steering motor. It should be noted, as explained above, that in this instance the power steering motor - when generating the at least one haptically perceptible stimulus - has no power steering function for reducing a driver's effort to turn the steering wheel or handlebar. It is only used for generating a haptically perceptible stimulus, such as a vibration. That is, the power steering motor may have a double function such as, in a normal use, the power steering motor is used in its original power steering function in assisting to perform the change of direction in the maneuver, and in the instance of the present invention, it is also used as haptic feedback actuator before the vehicle reaches the position of the maneuver. Accordingly, the costs of such driving assist system can be reduced since no additional actuator is required, but the already existing power steering motor can be used.

According to an embodiment, the control device is configured to drive the power steering motor for generating the at least one stimulus in a rotation direction in which the steering wheel or handlebar is to be rotated for the vehicle to follow the maneuver. Accordingly, also in this embodiment, the driver can intuitively recognize from the rotation direction of the stimulus in which direction to turn the steering wheel or handlebar for following the maneuver.

According to an embodiment, the control device is configured to drive the power steering motor for generating at least one vibration on the steering wheel or handlebar.

A vibration is a haptic stimulus which can be sensed easily by the driver through his or her hands placed on the steering wheel or handlebar.

According to an embodiment, the control device is configured to generate and provide the actuation signal to at least one actuator device provided on the steering wheel or handlebar for generating the at least one haptically perceptible stimulus. Accordingly, such a solution is preferable if the power steering motor is not appropriate, is not available, or shall not be used to generate the stimulus, or a so-called retrofitting solution (also known as aftermarket solution) shall be provided in which one or more actuators are provided on the steering wheel or handlebar at a later time after the vehicle has been manufactured by the vehicle manufacturer to retrofit the vehicle to implement additional functions.

Particularly, according to an embodiment, the control device is configured to actuate the one or more actuator devices to generate the at least one stimulus at a location of the steering wheel or handlebar in the direction of which the steering wheel or handlebar is to be rotated by the driver or autonomous driving control system for the vehicle to follow the maneuver. The driver can thus intuitively recognize from the location of the stimulus in which direction to turn the steering wheel or handlebar for following the maneuver.

According to a further embodiment, the control device is configured to generate and provide the actuation signal to the at least one actuator device for generating at least one vibration on the steering wheel or handlebar.

According to an embodiment, the control device is configured to generate and provide the actuation signal to at least one of a plurality of actuator devices provided on the steering wheel for generating the at least one haptically perceptible stimulus through the at least one actuator device. At least one actuator device is switched among the plurality of actuator devices by the control device upon rotation of the steering wheel. Therefore, even upon turning the steering wheel, the at least one stimulus can be generated at the same or similar location so that the driver can thus intuitively recognize from the location of the stimulus in which direction to turn the steering wheel for following the maneuver.

According to an embodiment, the control device is configured to generate a sequence of actuation signals depending on a distance and/or velocity of the vehicle in relation to the position of the maneuver. The driver can thus intuitively recognize how far from the vehicle the position of the maneuver is and if the position of the maneuver is getting so close as to brake the vehicle more intensively.

According to an embodiment, the control device is configured to generate a sequence of actuation signals to generate haptically perceptible stimuli with varying intensity, for example with a varying amplitude and/or varying time instance of a respective stimulus in relation to a preceding stimulus. Therefore, if the amplitude of a stimulus is getting larger and/or the time instances of respective two subsequent stimuli are getting closer to each other, the driver can intuitively recognize how far from the current vehicle position the upcoming maneuver currently is, and if the position of the maneuver is getting close, decide whether to brake the vehicle more intensively.

Particularly, the control device is configured to increase the amplitude and/or a duration, and/or shorten a time instance, of a respective subsequent stimulus in relation to a preceding stimulus with decreasing distance of the vehicle in relation to the position of the maneuver.

According to an embodiment, the control device comprises a user interface which is configured to receive user input regarding at least one of the following: an intensity of the at least one haptically perceptible stimulus acting on the steering wheel or handlebar, a distance of the vehicle in relation to the position of the maneuver at which a first haptically perceptible stimulus is initiated by the control device, and a pattern of the at least one haptically perceptible stimulus, such as a pattern of vibration. The user can thus tailor the haptic feedback according to his or her needs.

According to a further aspect, the present disclosure also relates to a vehicle comprising a steering wheel or handlebar, a navigation system configured to provide at least one signal which is indicative of an imminent maneuver of the vehicle travelling on a calculated route to a destination, the maneuver involving at least one change in a moving direction of the vehicle, at least one haptic actuator configured to generate a haptically perceptible stimulus acting on the steering wheel or handlebar, and a driving assist system as described herein. The control device is coupled to the navigation system to receive the at least one signal from the navigation system and to the at least one haptic actuator for generating the at least one haptically perceptible stimulus.

According to a further aspect, the present disclosure also relates to a method for assisting driving of a vehicle having a steering wheel or handlebar, wherein the method comprises the steps of receiving from a navigation system at least one signal which is indicative of an imminent maneuver of the vehicle travelling on a calculated route to a destination, the maneuver involving at least one change in a moving direction of the vehicle, and in response to receiving the at least one signal from the navigation system indicating an imminent maneuver of the vehicle, generating at least one haptically perceptible stimulus acting on the steering wheel or handlebar of the vehicle by at least one haptic actuator of the vehicle before the vehicle reaches a position of the maneuver.

Any aspect and function as described in relation to the driving assist system may analogously be applied in the method for assisting driving in accordance with the aspects and embodiments as described herein, wherein the respective functions are performed as respective steps of the method. The respective functions and steps may be implemented in software and/or hardware in any appropriate processing device, such as in one or more microprocessors of a local device, e.g., of a navigation system and/or an Electronic Control Unit (ECU) of the vehicle.

The invention will now be described with reference to the drawings in which:
- Fig. 1: shows a schematic depiction of a part of an exemplary vehicle having a driving assist system according to aspects of the present invention,
- Fig. 2: shows an embodiment of an exemplary sequence of haptically perceptible stimuli when approaching a position of an upcoming maneuver according to aspects of the invention,
- Fig. 3A, 3B: show a respective flowchart of a process of generating haptically perceptible stimuli according to aspects of the invention.

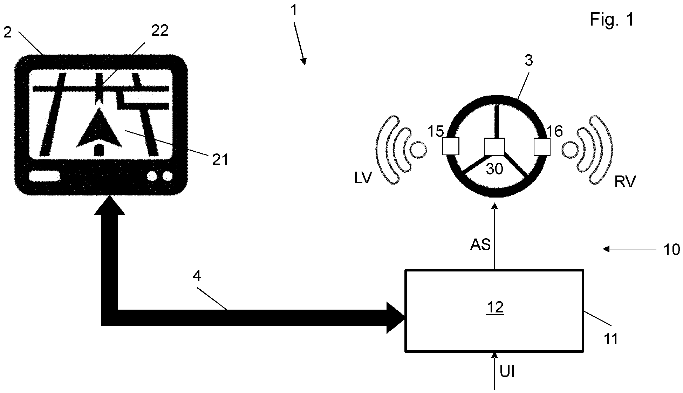

**Fig. 1** shows a schematic depiction of a part of an exemplary vehicle having a driving assist system according to aspects of the present invention. In particular, a vehicle 1, such as a truck or automobile, comprises a steering wheel 3 which is used for steering the vehicle. For example, the vehicle has an additional power steering system (not explicitly shown) in a commonly known configuration for assisting the driver in turning the steering wheel for reducing the driver's efforts in turning the steering wheel. **Fig. 1** schematically shows a power steering motor 30 as a part of such power steering system, which may be located on the steering column (rotation axis) of the steering wheel perpendicular to the drawing plane, e.g. at a mounting end of the steering column opposite to the steering wheel, as commonly known.

In other embodiments, not shown in the Figures, the vehicle 1 may be a motorcycle or bicycle having a handlebar for steering instead of a steering wheel 3. In the following, features described in relation to a vehicle having a steering wheel may equally be applied to a vehicle having a handlebar for steering the vehicle, so that explicit references to vehicles having a handlebar will be omitted in the following for reasons of unnecessary repetitions.

The vehicle 1 further comprises a navigation system 2, such as an in-vehicle navigation system, with which the driver may calculate a route to a destination, as is commonly known. For example, the driver enters a destination on a user interface of the navigation system 2 which calculates a route to the destination and depicts the route on a display, such as a central information display on a dashboard of the vehicle, including a vehicle's position and moving direction 21. The route to the destination includes one or more maneuvers, such as at a crossroads or branch, which involves at least one change in a moving direction of the vehicle 1. For example, the navigation system 2 calculates a maneuver on a currently used first road at a crossroads 22 at which the vehicle 1 has to turn left to change the moving direction to follow the route along a transverse second road.

In the present embodiment, the vehicle 1 further comprises an ECU (Electronic Control Unit) 11 which controls one or more functions of the vehicle 1, as commonly known in the art. For example, the ECU 11 implements various functional units of the vehicle, such as a steering controller if the vehicle comprises a power steering system, and/or various other driving assist systems, such as an antilock braking system, etc. The control device 12 according to the present invention may be implemented in such ECU 11, or may be implemented in a steering controller, or in the navigation system 2, or in various other control units of the vehicle 1, e.g. in discrete or distributed manner. The control device 12 may be implemented in software and/or hardware in any appropriate processing device, such as in one or more microprocessors and associated circuitry of a local device, e.g., of a dedicated control unit, such as the ECU 11.

The ECU 11, and thus the control device 12, is coupled with the navigation system 2 in wired manner, or wirelessly, for example in the present embodiment via a vehicle communications bus 4, such as a CAN bus commonly known. The communication between the navigation system 2 and the ECU 11 and the control device 12, respectively, may be implemented via any (automotive) standard communication protocol, like CAN, LIN or Flexray.

The vehicle 1 further comprises at least one haptic actuator for generating at least one haptically perceptible stimulus acting on the steering wheel 3. According to one embodiment, the vehicle 1 comprises a power steering motor 30, as described above, which may also be used (in addition to its normal power steering function) as a haptic actuator without power steering function, e.g. at certain time instances where no power assisting force is required, as described herein. For example, the power steering motor 30 may be actuated to generate a rotational vibration on the steering wheel, as described in more detail below. For example, in case that the control device 12 is or is part of a steering controller, the steering controller actuates the power steering motor 30 accordingly via an actuation signal AS to generate one or more such vibrations.

According to another embodiment, the vehicle 1 comprises one or more actuator devices 15, 16 provided on the steering wheel 3 for generating the at least one haptically perceptible stimulus. For example, the steering wheel 3 may be provided with one or more vibrating actuators arranged on the left and right side of the steering wheel 3, such as shown with the actuator devices 15, 16. For example, the actuator devices 15, 16 may be attached underneath the rim of the steering wheel 3 to cause vibrations on the rim which can be felt by the driver while having the hands placed on the rim. The steering wheel can be provided with only one of the actuator devices 15, 16, or with two or more than two, depending on the actual needs, such as a diameter of the rim of the steering wheel 3.

Analogously to the embodiment described above, the control device 12 actuates one or more of the actuator devices 15, 16, e.g. as described in more detail below, via a respective actuation signal AS to generate one or more haptically perceptible stimuli, such as vibrations schematically depicted in **Fig. 1** as vibrations LV on the left side and RV on the right side of the steering wheel 3.

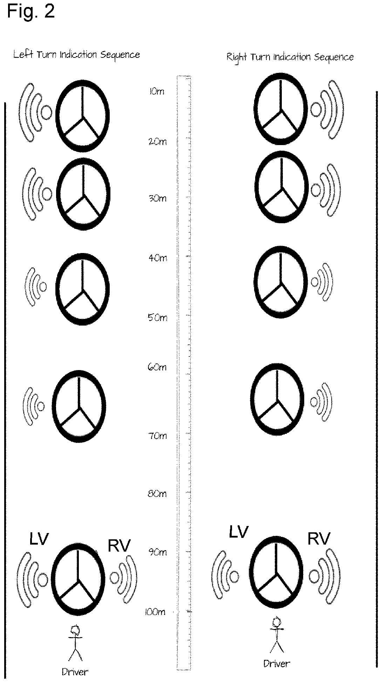

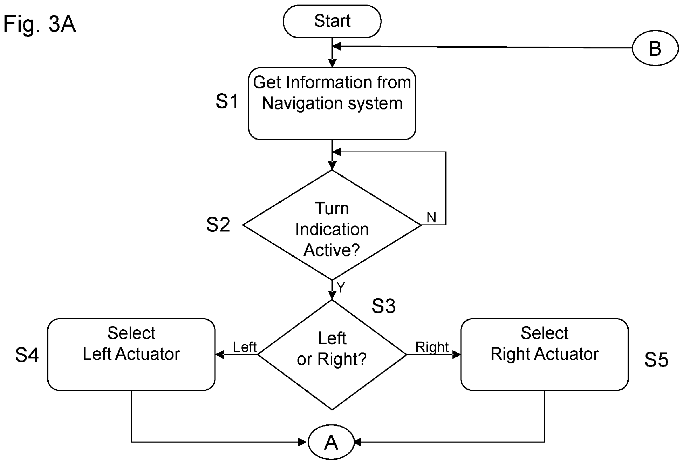

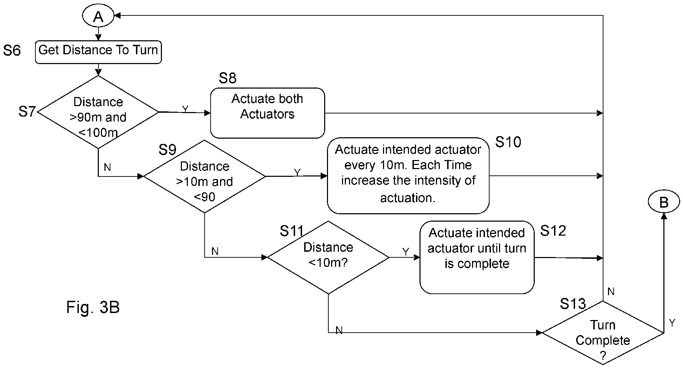

**Fig. 2** and **Fig. 3A****,** **3B** show an embodiment of an exemplary sequence of haptically perceptible stimuli and a respective flowchart of a process of generating such stimuli when approaching a position of an upcoming maneuver according to aspects of the invention.

In an initial step S1, information is provided by the navigation system 2 whether there will be an imminent maneuver of the vehicle 1 travelling on a calculated route to a destination within a certain time period. For example, as shown in **Fig. 1****,** when the vehicle's position 21 is approaching a crossroads 22 on the route which involves a change in a moving direction of the vehicle, e.g. the vehicle will have to turn left to follow the route, at least one signal which is indicative of such imminent maneuver will be sent from the navigation device 2 to the control device 12.

According to an embodiment, such one or more signals are sent via the communications bus 4, e.g. using a CAN bus protocol. The described communication protocol can be extended in various ways. Such signal(s) sent from the navigation device 2 to the control device 12 may comprise a respective data packet and involve, as a basic implementation example, multiple databytes, e.g. beginning with an ID, a first databyte indicative of current vehicle's distance to the upcoming maneuver position, a second databyte indicative of whether the maneuver involves a left or right turn, and a third databyte which is indicative of the impulse or stimulus requirement for the steering wheel 3. Such data packet may be sent as a command signal over the bus 4 to the control device 12 which in response thereto generates one or more actuation signals AS to the respective actuator 15, 16, 30 to generate one or more haptically perceptible stimuli, such as vibrations LV and/or RV, as described below.

In return, the control device 12 may send a data packet back to the navigation system 2 which acknowledges the receipt of the command signal (data packet) along with ID and respective databytes indicative of, e.g., the impulse or stimulus provided, steering wheel angle, and time stamp.

Returning back to **Fig. 3A****,** in step S2, it is determined whether the function "Turn indication" via haptic feedback is active, and if yes, the process advances to step S3 which determines whether the upcoming maneuver involves a change of the current vehicle's moving direction into a left or right moving direction. If it involves a left turn, then the left actuator device 15 will be selected (step S4), if a right turn, then the right actuator device 16 will be selected (step S5). In the embodiment of using a power steering motor 30 as an actuator, as described above, a respective rotational vibration will be selected, e.g. with higher vibration amplitudes directed in the respective left or right rotational direction.

**Fig. 2** in combination with **Fig. 3B** shows an embodiment of an exemplary sequence of haptically perceptible stimuli when approaching the position of the upcoming maneuver at crossroads 22 according to aspects of the invention.

In step S6, the distance of the vehicle in relation to the position of the upcoming maneuver is extracted from the signal(s) sent by the navigation system 2 (e.g., which are sent at regular intervals as the vehicle moves along the route), e.g. from the first databyte of the data packet as described above. If the determination indicates the distance is greater than 90 m and lower than 100 m (step S7), then both actuators 15, 16 are actuated at the same time to generally inform the driver of an upcoming maneuver (step S8).

If the determination indicates the distance is greater than 10 m and lower than 90 m (step S9), then the respective selected one of the actuators 15, 16 is actuated every, e.g., 10 m the vehicle moves along the route to generate a left or right vibration LV, RV, respectively. According to an embodiment, as the vehicle moves closer to the position of maneuver, with each subsequent vibration, an intensity of the vibration LV or RV may be increased (e.g. by increasing amplitude and/or shorten time instance in relation to a preceding one) to inform the driver that the maneuver is getting closer (step S10). This is schematically shown in **Fig. 2** by increasing dimensions of vibrations LV, RV.

If the determination indicates the distance is lower than 10 m (step S11), then the respective selected one of the actuators 15, 16 is actuated continuously until the turn of direction at the maneuver is complete (step S12). If the turn is complete, the process returns to step S1, otherwise to step S6 (step S13). In an embodiment using a power steering motor 30 as an actuator, as described above, a respective rotational vibration may be superimposed on a steering assist force provided by the power steering motor 30 during performing the turn of direction.

In the described embodiments, preferably a respective haptic actuator 15, 16, 30 is activated for generating the at least one haptically perceptible stimulus (here vibration LV or RV) in a manner and/or at a location of the steering wheel 3 which is indicative of the moving direction of the vehicle after the maneuver at crossroads 22, e.g. at a location of the steering wheel 3 in the direction of which the steering wheel is to be rotated for the vehicle to follow the maneuver. That is, for example, if the left actuator 15 is generating a left vibration LV, then the driver intuitively knows that the next maneuver involves a left turn.

According to a further embodiment, upon rotating the steering wheel 3, e.g. when performing the maneuver, the respective actuator device 15, 16 is switched among the plurality of actuator devices by the control device 12. For example, when the steering wheel 3 is turned 180°, then actuator device 16 (which is then on the left side) is actuated instead of actuator device 15 (which is then on the right side) so that a vibration LV on the left side of the steering wheel 3 is maintained even when turning the steering wheel.

According to some embodiments, it may be preferable if the control device 12 comprises a user interface UI schematically depicted in **Fig. 1****,** which is configured to receive user input regarding certain user preferences. In this way, the user may adjust one or more settings, such as one or more of the following: an intensity of the at least one haptically perceptible stimulus (LV, RV) acting on the steering wheel, a distance of the vehicle in relation to the position of the maneuver at which a first haptically perceptible stimulus (LV, RV) is initiated by the control device, and a pattern of the at least one haptically perceptible stimulus (LV, RV), particularly a pattern of vibration.

With the present invention, advantageously, the driver has full focus on the roads and control on the steering wheel for most of the times, and will not be distracted by following a route on a central display screen, so that the driver can focus fully on driving. The system also allows driver to listen to music without any interruptions. The driver can avoid sharp turns in case of late realization of the direction (if driver misses the audio-visual indication).

Although respective embodiments of the present invention have been described in detail above, the present invention is not limited to the specific embodiments, and various modifications and changes are applicable within the scope of the invention described in the claims.

### REFERENCE SIGNS LIST

- 1: vehicle
- 2: navigation system
- 3: steering wheel
- 4: communications bus
- 10: driving assist system
- 11: Electronic Control Unit (ECU)
- 12: control device
- 15, 16: actuator device
- 21: vehicle position
- 22: crossroads
- 30: power steering motor
- AS: actuation signal
- LV: left vibration
- RV: right vibration
- Ul: user interface
- S1-S13: step

## Claims

1. A driving assist system (10) for assisting driving of a vehicle (1) having a steering wheel (3) or handlebar, comprising:
a control device (12) configured to receive from a navigation system (2) at least one signal which is indicative of an imminent maneuver of the vehicle travelling on a calculated route (21) to a destination, the maneuver involving at least one change in a moving direction of the vehicle,
wherein the control device (12) is configured to process the at least one signal from the navigation system (2) and, in a case in which the at least one signal is indicating an imminent maneuver of the vehicle, to generate and provide an actuation signal (AS) to at least one haptic actuator (15, 16, 30) of the vehicle for generating at least one haptically perceptible stimulus (LV, RV) acting on the steering wheel (3) or handlebar before the vehicle reaches a position of the maneuver.

2. The driving assist system (10) according to claim 1, wherein the control device (12) is configured to generate and provide the actuation signal (AS) to the at least one haptic actuator (15, 16, 30) for generating the at least one haptically perceptible stimulus in a manner and/or at a location of the steering wheel (3) or handlebar which is indicative of the moving direction of the vehicle after the maneuver.

3. The driving assist system (10) according to claim 1 or 2, wherein the control device (12) is configured to generate and provide the actuation signal (AS) to a power steering motor (30) acting on the steering wheel (3) or handlebar for generating the at least one haptically perceptible stimulus through the power steering motor.

4. The driving assist system (10) according to claim 3, wherein the control device (12) is configured to drive the power steering motor (30) for generating the at least one stimulus in a rotation direction in which the steering wheel (3) or handlebar is to be rotated for the vehicle to follow the maneuver.

5. The driving assist system (10) according to claim 3 or 4, wherein the control device (12) is configured to drive the power steering motor (30) for generating a vibration on the steering wheel (3) or handlebar in a rotational direction.

6. The driving assist system (10) according to one of claims 1 to 5, wherein the control device (12) is configured to generate and provide the actuation signal (AS) to at least one actuator device (15, 16) provided on the steering wheel (3) or handlebar for generating the at least one haptically perceptible stimulus (LV, RV).

7. The driving assist system (10) according to claim 6, wherein the control device (12) is configured to actuate the actuator device (15, 16) to generate the at least one stimulus (LV, RV) at a location of the steering wheel (3) or handlebar in the direction of which the steering wheel (3) or handlebar is to be rotated for the vehicle to follow the maneuver.

8. The driving assist system (10) according to claim 6 or 7, wherein the control device (12) is configured to generate and provide the actuation signal (AS) to the at least one actuator device (15, 16) for generating a vibration (LV, RV) on the steering wheel (3) or handlebar.

9. The driving assist system (10) according to one of claims 6 to 8, wherein the control device (12) is configured to generate and provide the actuation signal (AS) to at least one of a plurality of actuator devices (15, 16) provided on the steering wheel (3) for generating the haptically perceptible stimulus (LV, RV) through the at least one actuator device, wherein the at least one actuator device (15, 16) is switched among the plurality of actuator devices by the control device (12) upon rotation of the steering wheel (3).

10. The driving assist system (10) according to one of claims 1 to 9, wherein the control device (12) is configured to generate a sequence of actuation signals (AS) depending on a distance and/or velocity of the vehicle in relation to the position of the maneuver.

11. The driving assist system (10) according to one of claims 1 to 10, wherein the control device (12) is configured to generate a sequence of actuation signals (AS) to generate haptically perceptible stimuli with varying intensity, particularly with at least one of a varying amplitude and varying time instance of a respective stimulus in relation to a preceding stimulus.

12. The driving assist system (10) according to claim 12, wherein the control device (12) is configured to increase at least one of the amplitude and a duration, and/or shorten a time instance, of a respective subsequent stimulus with decreasing distance of the vehicle in relation to the position of the maneuver.

13. The driving assist system (10) according to one of claims 1 to 12, wherein the control device (12) comprises a user interface (III) which is configured to receive user input regarding at least one of the following: an intensity of the at least one haptically perceptible stimulus (LV, RV) acting on the steering wheel or handlebar, a distance of the vehicle in relation to the position of the maneuver at which a first haptically perceptible stimulus (LV, RV) is initiated by the control device, and a pattern of the at least one haptically perceptible stimulus (LV, RV), particularly a pattern of vibration.

14. A vehicle (1) comprising:
a steering wheel (3) or handlebar,
a navigation system (2) configured to provide at least one signal which is indicative of an imminent maneuver of the vehicle travelling on a calculated route (21) to a destination, the maneuver involving at least one change in a moving direction of the vehicle,
at least one haptic actuator (15, 16, 30) configured to generate at least one haptically perceptible stimulus (LV, RV) acting on the steering wheel (3) or handlebar, and
a driving assist system (10) according to one of the preceding claims, wherein the control device (12) is coupled to the navigation system (2) to receive the at least one signal from the navigation system and to the at least one haptic actuator (15, 16, 30) for providing the actuation signal (AS) to the at least one haptic actuator (15, 16, 30) for generating the at least one haptically perceptible stimulus (LV, RV).

15. A method for assisting driving of a vehicle (1) having a steering wheel (3) or handlebar, comprising:
receiving from a navigation system (2) at least one signal which is indicative of an imminent maneuver of the vehicle travelling on a calculated route (21) to a destination, the maneuver involving at least one change in a moving direction of the vehicle,
in response to receiving the at least one signal from the navigation system (2) indicating an imminent maneuver of the vehicle, generating at least one haptically perceptible stimulus (LV, RV) acting on the steering wheel (3) or handlebar of the vehicle by at least one haptic actuator (15, 16, 30) of the vehicle before the vehicle reaches a position of the maneuver.
